(19) Europäisches Patentamt
European Patent Office
Office européen des brevets

(11) EP 1 839 996 A2

(12) **EUROPEAN PATENT APPLICATION**

(43) Date of publication:
**03.10.2007 Bulletin 2007/40**

(51) Int Cl.:
**B62D 5/04** (2006.01)

(21) Application number: **07006715.2**

(22) Date of filing: **30.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.03.2006 JP 2006096398**

(71) Applicant: **NSK Ltd.**
**Tokyo 141-8560 (JP)**

(72) Inventor: **Wei, Yong**
**Maebashi-shi**
**Gunma, 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Control device for electric power steering apparatus**

(57)    A control device for an electric power steering apparatus is adapted to calculate a current command value of a motor (20) for applying a steering assist force to a steering mechanism in accordance with a steering torque and a vehicle speed so that the motor (20) is driven and controlled under a feedback control. The control device includes an SAT estimating part (40) for inputting an angular velocity and an angular acceleration of the motor (20), the steering torque and the current command value to estimate an SAT and a correcting part for determining a traveling state of a vehicle in accordance with the SAT value estimated in the SAT estimating part (40), the steering torque and a steering angle to correct the current command value depending on the traveling state.

FIG. 1

**Description**

BACKGROUND OF THE INVENTION

1. Field of the Invention

The present invention relates to a control device for an electric power steering apparatus for applying a steering assist force to a steering system of a vehicle by driving a motor. More particularly, the present invention relates to a safe and high-performance control device for an electric power steering apparatus in which when a condition for torque steer is satisfied, the current command value of the motor is corrected in accordance with the value of a SAT (self aligning torque) and a steering wheel is prevented from being seized due to the state of a road surface or a driving.

2. Description of Related Art

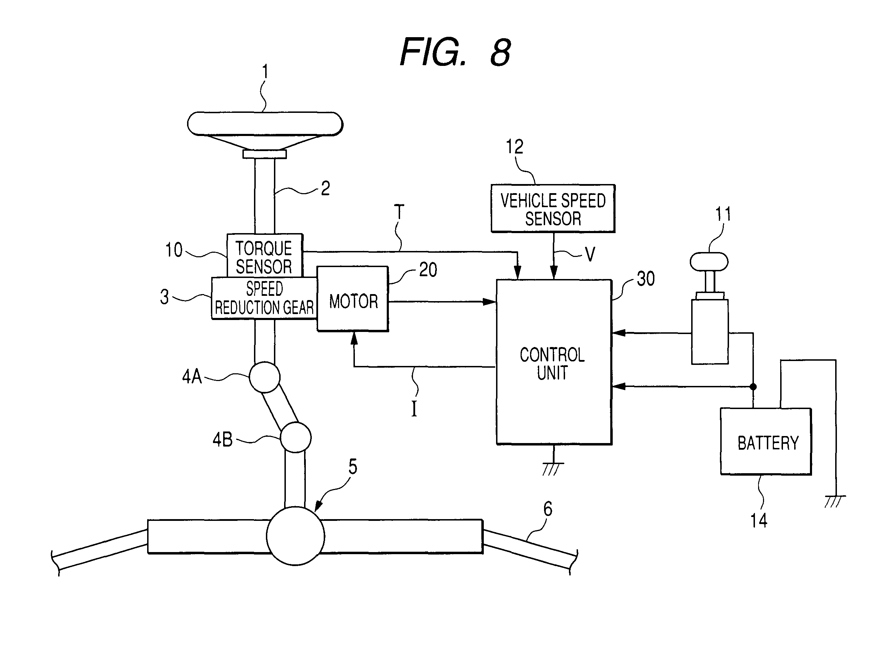

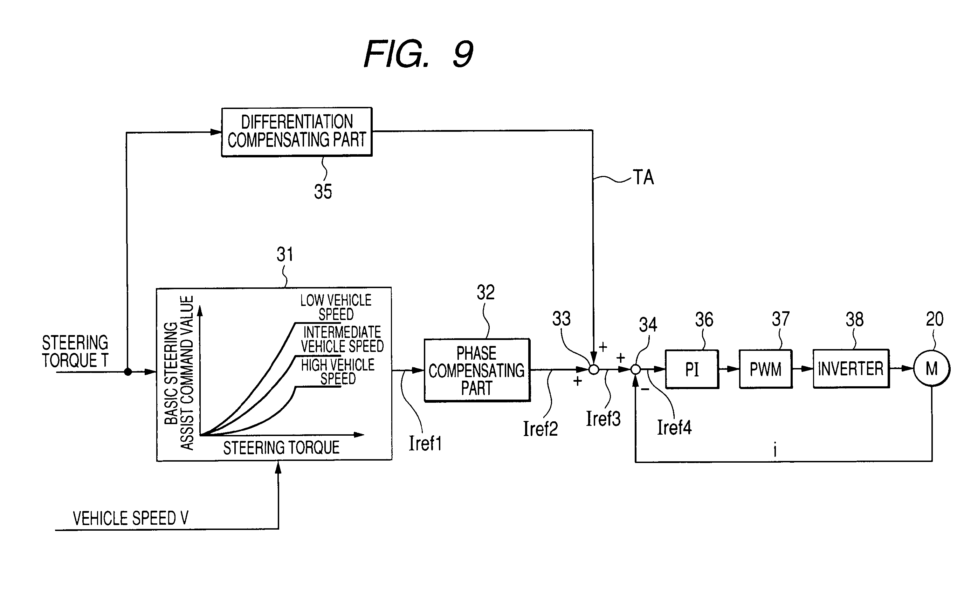

An electric power steering apparatus applies auxiliary load (assist) to a steering device of a vehicle by the rotating force of a motor. In the electric power steering apparatus, motor driving force is transmitted to a steering shaft or a rack shaft via a speed reducer through a transmission mechanism such as a gear or a belt so as to assist the steering device. The above-described conventional electric power steering apparatus performs a feedback control of a motor current to accurately generate an assist torque (steering assist force) . The feedback control serves to adjust voltage applied to the motor so as to decrease the difference between a current command value and a detected value of a motor current. The voltage applied to the motor is ordinarily adjusted by adjusting the duty ratio of a PWM (pulse width modulation) control.
Here, an ordinary structure of the electric power steering apparatus will be described by referring to Fig. 8. A column shaft 2 of a steering wheel 1 is connected to a tie rod 6 of a steering road-wheel via a speed reduction gear 3, universal joints 4A and 4B and a pinion and rack mechanism 5. In the column shaft 2, a torque sensor 10 for detecting the steering torque of the steering wheel 1 is provided. A motor 20 for assisting the steering force of the steering wheel 1 is connected to the column shaft 2 through the speed reduction gear 3. To a control unit 30 for controlling the power steering device, an electric power is supplied from a battery 14 and an ignition key signal is inputted from an ignition key 11. The control unit 30 calculates the steering assist command value I of an assist command by using an assist map in accordance with a steering torque value T detected in the torque sensor 10 and a vehicle speed V detected in a vehicle speed sensor 12, and controls a current supplied to the motor 20 in accordance with the calculated steering assist command value I.
The control unit 30 is mainly composed of a CPU (or an MPU or an MCU). Ordinary functions performed by a program in the CPU are shown in Fig. 9.
By referring to Fig. 9, the functions and operations of the control unit 30 will be described. The steering torque T detected in the torque sensor 10 and the vehicle speed V from the vehicle speed sensor 12 are inputted to a steering assist command value calculation part 31 to calculate a basic steering assist command value Iref 1. The basic steering assist command value Iref 1 calculated in the steering assist command value calculation part 31 is phase compensated in a phase compensating part 32 to improve the stability of a steering system and a phase compensated steering assist command value Iref 2 is inputted to an adding part 33. Further, the steering torque T is inputted to a differentiation compensating part 35 of a feed forward system for improving a response speed. A differentiation compensated steering torque TA is inputted to the adding part 33. The adding part 33 adds the steering assist command value Iref 2 to the steering torque TA and inputs a steering assist command value Iref 3 (= Iref 2 + TA) as an added result thereof to a feeding back subtracting part 34.
In the subtracting part 34, a deviation Iref 4 (= Iref 3 - i) between the steering assist command value Iref 3 and a fed back motor current i is obtained. The deviation Iref 4 is PI controlled in a PI control part 36, and further inputted to a PWM control part 37 to calculate the duty ratio and PWM drive the motor 20 through an inverter 38. The motor current i of the motor 20 is detected in a motor current detection part ( not shown in the drawing), inputted and fed back to the subtracting part 34.
In the above-described electric power steering apparatus, a steering wheel may be possibly seized depending on the condition of a road surface or a driving. When a quick braking operation in which an anti-skid operates is carried out on a road surface on which a friction coefficient in a right side on the surface is different from that in a left side (which is so called a μ split surface), a braking force generated in the right side of a vehicle is ordinarily different from that in the left side of the vehicle. Then, owing to the difference in braking force between the right side and the left side of the vehicle, a yawmoment deflecting the vehicle toward a higher friction coefficient on the road surface is generated. For an example, in the μ split surface of an actual road, snow or ice remains on a road shoulder so that the friction coefficient on the road surface is low, and on the other hand, asphalt in a central part of the road is dried or wetted so that the friction coefficient on the road surface is high. In this actual case, when right and left road wheels are respectively located at the road shoulder and the center of the road, if the quick braking operation is carried out, the braking force becomes higher in the central part of the road having high friction coefficient than the road shoulder side having low friction coefficient. As a result, the yaw moment is generated in the vehicle, so that the vehicle is deflected toward the central part of the road and the steering wheel is seized.

Since the seizure of the steering wheel may cause a serious problem in driving, it is necessary to prevent the steering wheel from being seized. As a related art for preventing the seizure of the steering wheel, a device is disclosed in, for instance, Japanese Patent Unexamined Publication JP-A-2005-1481 . In the device disclosed in the JP-A-2005-14 81, amounts of slip of right and left road wheels are calculated from the speed of a vehicle body and a speed of road wheels and a motor current is corrected in accordance with the difference in amount of slip to prevent a steering wheel from being seized. Further, in a device disclosed in Japanese Patent Unexamined Publication JP-A-2003-291838, a difference in braking force between road wheels is calculated by sensors respectively provided in the road wheels and a steering assist torque is applied in accordance with the calculated difference in braking force is applied so that a counter steering operation can be easily performed on the μ split surface.

Further, in a device disclosed in Japanese Patent Examined Publication JP-B-3105847, a difference in driving force between right and left road wheels is calculated for a vehicle that can respectively independently control the driving force of the right and left road wheels and a steering assist torque is applied in the direction for canceling the difference in accordance with the calculated difference in driving force to prevent a torque steer.

However, in the control devices of the related art, in order to prevent the seizure of the steering wheel, an assist torque is corrected by using the difference in slip between the right and left road wheels. Therefore, during an ordinary steering operation, there is a fear that a steering feeling is affected thereby. Further, in the above-described control device, a problem arises that sensors or independent driving and braking devices are necessary to increase a cost.

SUMMARY OF THE INVENTION

The present invention is devised by considering the above-described circumstances and it is an obj ect of the present invention to provide a control device for an electric power steering apparatus with a simple structure in which a steering wheel is always prevented from being seized due to the state of a road surface or a driving without affecting a steering feeling and a safe and comfortable steering performance can be obtained.

According to a first aspect of the invention, there is provided a control device for an electric power steering apparatus comprising:

a steering assist command value calculation part that calculates a current command value for a motor applying a steering assist force to a steering mechanism in accordance with a steering torque and a vehicle speed so that the motor is controlled under a feedback control;
an SAT (self aligning torque) estimating part to which an angular velocity of the motor, an angular acceleration of the motor, the steering torque and the current command value are inputted so as to estimate an SAT; and
a correcting part that determines a traveling state of a vehicle in accordance with the SAT value estimated in the SAT estimating part, the steering torque and a steering angle to correct the current command value depending on the traveling state.

According to a second aspect of the invention, there is provided a control device for an electric power steering apparatus comprising:

a steering assist command value calculation part that calculates a current command value for a motor applying a steering assist force to a steering mechanism in accordance with a steering torque and a vehicle speed so that the motor is controlled under a feedback control;
an SAT sensor that measures a SAT of a vehicle; and
a correcting part that determines a traveling state of a vehicle in accordance with the SAT value measured in the SAT sensor, the steering torque and a steering angle to correct the current command value depending on the traveling state.

According to third and sixth aspects of the invention, as set forth in the first and second aspects of the invention, respectively, it is preferable that correcting part comprises:

a first determining unit that determines directions of the steering torque and the steering angle; and
a second determining unit that determines whether an absolute value of a change ratio of the SAT value is larger than a predetermined value.

According to fourth and seventh aspects of the invention, as set forth in the first and second aspects of the invention, respectively, it is preferable that the correcting part comprises:

a third determining unit that determines directions of the steering torque and the steering angle; and
a fourth determining unit that determines whether an absolute value of a change ratio of the steering torque is larger than an absolute value of a change ratio of the steering angle.

According to a fifth aspect of the invention, as set forth in the first aspect of the invention, it is preferable that the SAT estimating part varies a gain in accordance with the vehicle speed.

According to the control device of the electric power steering apparatus of the present invention, since the traveling state of the vehicle is estimated, and when the condition for torque steer is satisfied, the current command value is corrected in accordance with the estimated or measured SAT value, the steering wheel is prevented from being seized due to the state of the road surface or the driving, the steering feeling can be improved without falling off the steering operation quality of the steering wheel and the safe and high-performance electric power steering apparatus can be provided. Further, since the structure is simple, the cost is not advantageously increased.

BRIEF DESCRIPTION OF THE DRAWINGS

Fig.1 is a block diagram showing a structural example of a control device according to the present invention;
Fig. 2 is a block diagram showing a structural example of an SAT estimating part;
Fig. 3 is a diagram shown a characteristic example of a friction estimating part;
Fig. 4 is a diagram showing a characteristic example of a vehicle speed sensitive gain;
Fig. 5 is a diagram showing a characteristic example of a determination part (52, 62);
Fig. 6 is a diagram showing a characteristic example of a determination part (57, 66);
Fig. 7 is a block diagram showing another structural example of a control device according to the present invention;
Fig. 8 is a diagram showing an ordinary structural example of an electric power steering apparatus; and
Fig. 9 is a block diagram showing a structural example of a control unit.

DETAILED DESCRIPTION OF EXEMPLARY EMBODIMENTS OF THE INVENTION EMBODIMENTS

As described above,

1) when a vehicle is accelerated or decelerated under the state of a road surface of split $\mu$, if a force acting on a right road wheel is different from that acting on a left road wheel; and
2) when there is a difference in driving force between a right side and a left side by driving the vehicle,
a steering wheel is seized by steering the vehicle. In such a case, a friction difference or a driving force difference between the right side and the left side is generated to generate a yaw moment. The yaw moment acts on a steering system as an external force. As a result, the value of an SAT changes. Accompanied therewith, below-described actions arise. For instance, the SAT value is changed, then, the torque of an intermediate shaft is varied, after that, a steering angle is varied and the steering wheel is seized. As understood from the change of the actions, the change of the SAT value most quickly appears in view of time. This change in SAT value substantially results in the seizure of the steering wheel. Accordingly, when the change of the SAT value can be decreased or eliminated, the seizure of the steering wheel can be prevented.

Therefore, in the present invention, a steering operation is divided into an ordinary steering operation having no seizure of the steering wheel and a steering operation having the seizure of the steering wheel that is generated in the above-described situations 1) and 2) from the relation between the SAT, the torque of the intermediate shaft (asteeringtorque) the steering angle (directions, a change ratio, a change start time, or the like). In the case of the steering operation having the seizure of the steering wheel, the current command value of an electric power steering apparatus is corrected in an opposite direction in accordance with the SAT, and the change of the SAT is assisted to decrease or eliminate an influence by the change of the SAT value and prevent the steering wheel from being seized.

In the present invention, there is provided with:

a SAT estimating part (or a SAT sensor) to which an angular velocity of a motor, an angular acceleration of the motor, the steering torque and the current command value are inputted to estimate the SAT; and
a correcting part that determining a traveling state of a vehicle in accordance with the SAT value (or the SAT value measured in the SAT sensor) estimated in the SAT estimating part, the steering torque and the steering angle to correct the current command value depending on the traveling state.

Due to this configuration, the seizure of the steering wheel due to the state of the road surface or the driving can be assuredly prevented and a steering feeling can be improved. No influence is given to the ordinary steering operation.

Now, an embodiment of the present invention will be described below by referring to the drawings.

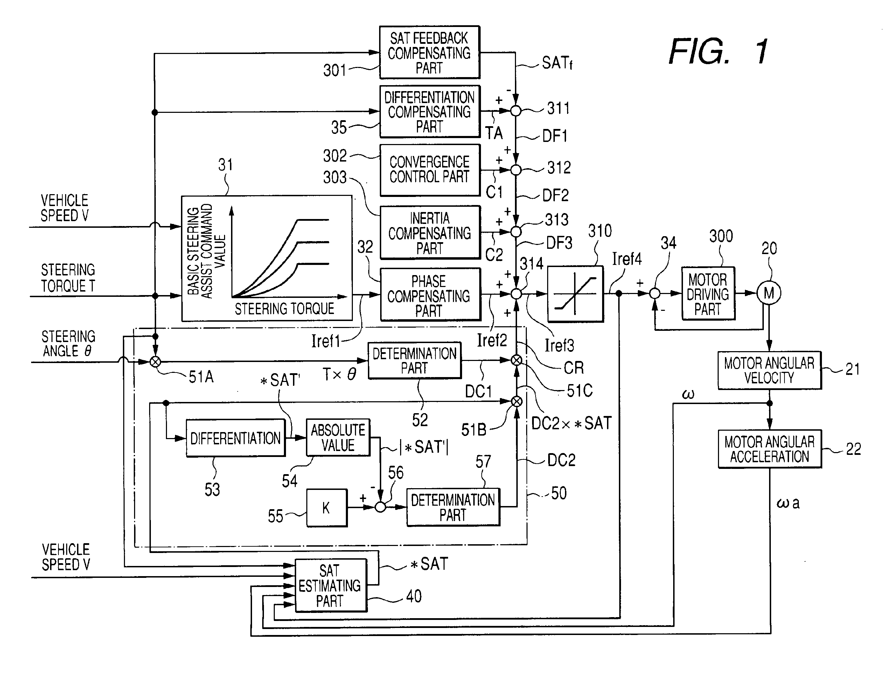

Fig. 1 shows a structural example of a control device according to the present invention correspondingly to Fig. 9. A motor driving part 300 in Fig. 1 integrally shows the PI control part 36, the PWM control part 37 and the inverter 38. A steering torque T is inputted to a steering assist command value calculation part 31 and a differentiation compensating part 35, and also inputted to a SAT feedback compensating part 301, a SAT estimating part 40 and a correcting part 50. A steering angle θ is inputted to the correcting part 50. To a motor 20, a motor angular velocity detection part 21 is attached and an angular velocity ω detected in the motor angular velocity detection part 21 is inputted to the SAT estimating part 40 and a motor angular acceleration detection part 22. An angular acceleration $\omega_a$ obtained in the motor angular acceleration detection part 22 is inputted to the SAT estimating part 40.

In the present invention, a convergence control part 302 and an inertia compensating part 303 are further provided. A difference DF1 (= TA - SATf) between a steering torque TA from the differentiation compensating part 35 and an output SATf of the SAT feedback compensating part 301 is obtained in a subtracting part 311. The difference DF1 is added to an output C1 of the convergence control part 302 in an adding part 312. An added result DF2 (= DF1 + C1) is added to an output C2 of the inertia compensating part 303 in an adding part 313. An added result DF3 (= DF2 + C2) is inputted to an adding part 314. The adding part 314 adds a current command value Iref 2 to the added result DF3. A current command value Iref 4 passing a current limiting part 310 for limiting a maximum current is inputted to a subtracting part 34 and to the SAT estimating part 40. In the subtracting part 34, a deviation from a motor current i is supplied to the motor driving part 300 as a current command value.

The SAT feedback compensating part 301 serves to perform a signal process for road surface information or a disturbance in a frequency area. The convergence control part 302 serves to suppress oscillating action of a steering wheel to improve the convergence of yaw of a vehicle. For instance, since when a steering operation is slightly carried out during traveling straight, an inertia moment in a steering mechanism applies a force in an opposite direction relative to a steering direction to deteriorate a sense of steering, the inertia compensating part 303 realizes a function for preventing the deterioration of the sense of steering.

A vehicle speed V inputted to the steering assist command value calculation part 31 is obtained from a vehicle speed sensor or a CAN (Control device Area Network). The steering angle θ is obtained from a steering angle sensor attached to the motor or by estimating the steering angle. Further, the motor angular velocity ω is detected in the motor angular velocity detection part 21 in Fig. 1, however, may be obtained from counter electromotive force of the motor 20.

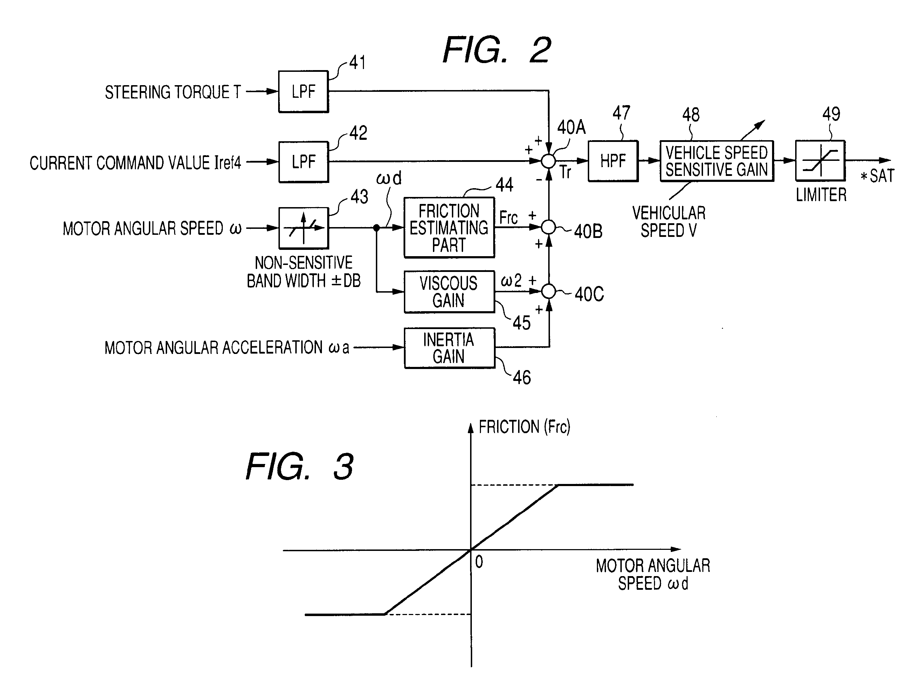

The structure of the SAT estimating part 40 is shown in, for instance, Fig. 2. The steering torque T is added and inputted to an adding and subtracting part 40A through a low-pass filter (LPF) 41. The current command value Iref 4 is inputted to the adding and subtracting part 40A through a low-pass filter (LPF). Further, the motor angular velocity ω is inputted to a friction estimating part 44 and a viscous gain 45 through a non-sensitive band part 43 of a non-sensitive band width of ± DB. A friction coefficient Frc from the friction estimating part 44 is inputted to an adding part 40B and an angular velocity ω2 from the viscous gain 45 is inputted to an adding part 40C, respectively. The motor angular acceleration $\omega_a$ is inputted to the adding part 40C through an inertia gain 46. An added result of the adding part 40C is added to the friction coefficient Frc in the adding part 40B. An added result thereof is subtracted and inputted to the adding and subtracting part 40A. A torque command value Tr as the added and subtracted result of the adding and subtracting part 40A is inputted to a high-pass filter (HPF) 47 and an output thereof becomes an SAT estimated value *SAT through a vehicle speed sensitive gain 48 and a limiter 49.

The state of torque generated from a road surface to a steering operation will be described below. The steering torque T is generated by steering a steering wheel by a driver. The motor 20 generates an assist torque Tm in accordance with the steering torque T. As a result, road wheels are steered and an SAT is generated as a reaction. At that time, a torque serving as a resistance relative to a steering operation of the steering wheel is generated by inertia J and the friction coefficient (static friction) Fr of the motor 20. An equation of motion such as a mathematical formula 1 as described below is obtained by considering the balance of these forces.

(Mathematical Formula 1)

$$J \cdot \omega_a + Fr \cdot \text{sign}(\omega) + SAT = Tm + T$$

Here, When the above-described mathematical formula 1 is Laplace transformed by setting an initial value to zero to solve the SAT, a below-described mathematical formula 2 is obtained.

(Mathematical Formula 2)

$$SAT(s) = Tm(s) + T(s) - J \cdot \omega_a(s) + Fr \cdot sign(\omega(s))$$

As understood from the above-described mathematical formula 2, the inertia J and the static friction Fr of the motor 20 are previously obtained as constants so that the SAT can be estimated from the motor rotating angular velocity $\omega$, the motor rotating angular acceleration $\omega_a$, a steering assist force and a steering signal. Accordingly, the steering torque T, the motor angular velocity $\omega$, the motor angular acceleration $\omega_a$ and the current command value Iref 4 are respectively inputted to the SAT estimating part 40 because of the above-described reason.

The LPFs 41 and 42 are provided to remove noise. The non-sensitive band part 43 suppresses characteristics of the motor angular velocity $\omega$ in the vicinity of 0. A motor angular velocity $\omega d$ as an output of the non-sensitive band part 43 is gain adjusted in the friction estimating part 44 and the viscous gin 45. The non-sensitive band part 43 is provided to remove an influence by the fine variation of the motor angular velocity $\omega$ during holding the steering operation. The characteristics of the friction estimating part 44 are gradually increased in an area where the motor angular velocity $\omega d$ is low, and reach a constant value when the motor angular velocity $\omega d$ is not lower than a prescribed value, as shown in Fig. 3. In the present invention, a viscous friction is not considered and only a Coulomb's friction is considered. Since in the Coulomb's friction, a discontinuity is generated at a point zero, the friction is gradually changed depending on the motor angular velocity $\omega d$ so as to decrease the discontinuity as shown in Fig. 3. The viscous gain 45 as a reaction generated depending on speed has a constant value.

The motor angular acceleration $\omega_a$ is gain adjusted by the inertia gain 46 of a constant value and inputted to the adding part 40C.

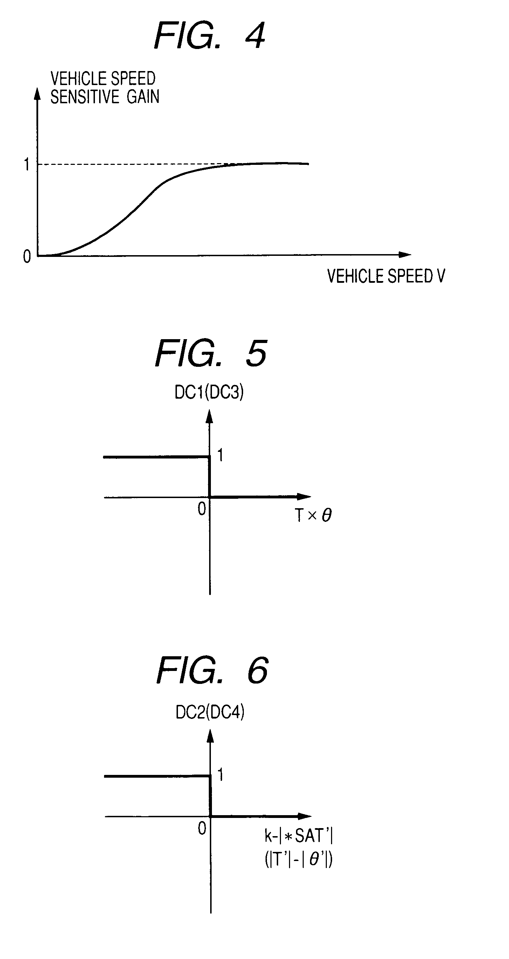

Only a high frequency component of the output of the adding and subtracting part 40A is extracted in the high-pass filter (HPF) 47 and gain adjusted in the vehicle speed sensitive gain 48 having vehicle speed sensitive characteristics as shown in Fig. 4 to output the SAT estimated value * SAT through the limiter . 49 for limiting a maximum value. The SAT estimated value *SAT is inputted to the correcting part 50. In this embodiment, since the vehicle speed sensitive gain 48 is used to estimate the SAT, the vehicle speed V is inputted to the SAT estimating part 40.

Further, the correcting part 50 includes:

a multiplying part 51A for multiplying the steering angle $\theta$ by the steering torque T;
a determination part 52 for determining the traveling state of the vehicle in accordance with the multiplied value T x $\theta$ of the multiplying part 51A and outputting a determining signal DC1;
a differentiation part 53 for differentiating the SAT estimated value *SAT;
an absolute value part 54 for obtaining an absolute value |*SAT' | of a differentiated value *SAT' from the differentiation part 53;
a subtracting part 56 for subtracting the absolute value |*SAT'| from a constant K of a constant part 55;
a determination part 57 for determining the state of a road surface in accordance with a subtracted result (=K-|*SAT'|1) in the subtracting part 56 to output a determining signal DC2;
a multiplying part 51B for multiplying the determining signal DC2 by the SAT estimated value *SAT; and
a multiplying part 51C for multiplying a multiplied result of the multiplying part 51B by the determining signal DC1 to output a correcting signal CR.

As shown in Fig. 5, in the determination part 52, when the multiplied value T x $\theta$ is not smaller than 0, that is, the steering torque T and the steering angle $\theta$ have the same directions, the determining signal DC1 indicates "0". When the multiplied value T x $\theta$ is smaller than 0, that is, the steering torque T and the steering angle $\theta$ have different directions, the determining signal DC1 indicates "1". Namely, the determination part 52 has characteristics of a below-described mathematical formula 3.

(Mathematical Formula 3)

$$When \ T \ x \ \theta \geqq 0, \ DC1 = 0$$

$$When \ T \ x \ \theta < 0, \ DC = 1$$

Further, as shown in Fig. 6, in the determination part 57, when "K-|*SAT'| " is not smaller than 0, the determining signal DC2 indicates "0". When "K-|*SAT'| " is smaller than 0, the determining signal DC2 indicates "1". Namely, the determination part 57 has characteristics of a below-described mathematical formula 4.

$$\text{(Mathematical Formula 4)}$$

$$\text{When } K-|*SAT'| \geqq 0, \ DC2 = 0$$

$$\text{When } K-|*SAT'| < 0, \ DC2 = 1$$

In the above-described structure, the correcting part 50 calculates a vehicle traveling state variable $(T \times \theta)$ in the multiplying part 51A by the steering torque T and the steering angle $\theta$. When the steering torque T and the steering angle $\theta$ have the same directions, the determination part 52 determines a steering operation control to be an ordinary steering control and sets the determining signal DC1 to "0". Accordingly, in this case, the correcting signal CR also indicates "0" irrespective of the determining signal DC2 and the SAT estimated value *SAT, so that the ordinary steering control is carried out. Further, when "K- | *SAT' |" as an input of the determination part 57 is not larger than the constant K set to the constant part 55, the determining signal DC2 indicates "0", the multiplied result in the multiplying part 51B also indicates "0", and accordingly, the correcting signal CR is also "0" irrespective of the determining signal DC1, so that the ordinary steering control is carried. That is, in the case of $K \geqq |*SAT'|$, the ordinary steering control is carried out irrespective of the determining signal DC1.

On the other hand, at the time of $K < |*SAT'|$, the determining signal DC2 of the determination part 57 is "1". The multiplied result "DC2 x *SAT" of the multiplying part 51B is equal to "1 x *SAT" so that the SAT estimated value *SAT is obtained. Further, when the steering torque T and the steering angle $\theta$ have the different directions, the determining signal DC is "1". Thus, in this case, the SAT estimated value *SAT is inputted to the adding part 314 as the correcting signal CR. That is, when $K \leqq |*SAT'|$ I and the steering torque T and the steering angle $\theta$ have the different directions, the SAT estimated value *SAT is added to the current command value Iref 2 as the correcting signal CR. Accordingly, the seizure of the steering wheel due to the state of the road surface or a driving can be prevented.

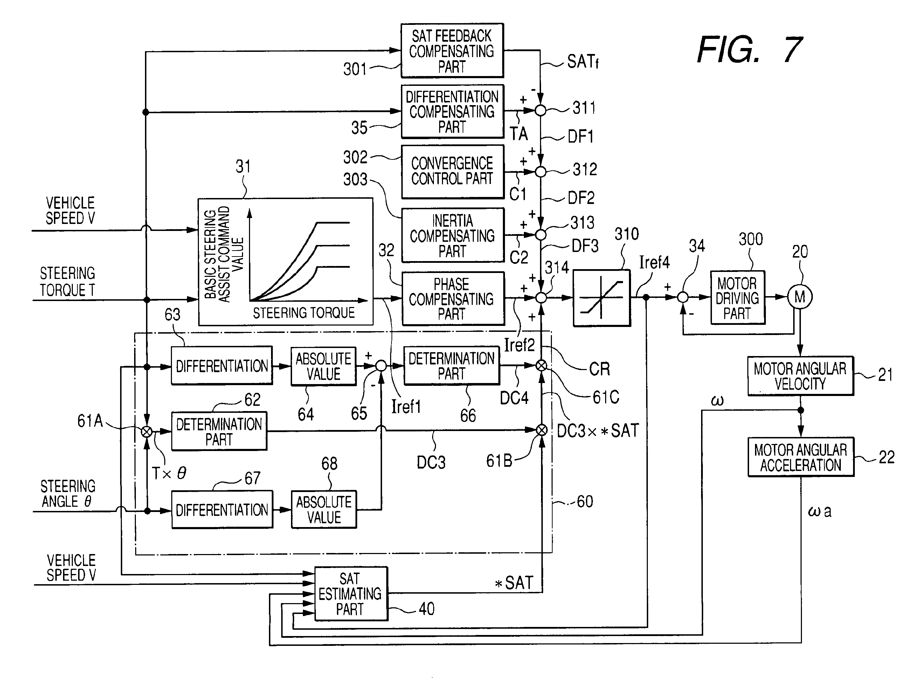

Now, another embodiment of the present invention is shown in Fig. 7 and described. This embodiment is the same as the embodiment of Fig. 1 except a correcting part 60.

The correcting part 60 includes a multiplying part 61A for multiplying a steering angle $\theta$ by a steering torque T, a determination part 62 for determining the traveling state of the vehicle in accordance with the multiplied value $T \times \theta$ of the multiplying part 61A and outputting a determining signal DC3, a differentiation part 63 for differentiating the steering torque T, an absolute value part 64 for obtaining the absolute value $|T'|$ of a differentiated value T' from the differentiation part 63, a differentiation part 67 for differentiating the steering angle $\theta$, an absolute value part 68 for obtaining the absolute value $|\theta'|$ of a differentiated value $\theta'$ from the differentiation part 67, a subtracting part 65 for obtaining a difference between the absolute value $|T'|$ and the absolute value $|\theta'|$, a determination part 66 for determining the state of a road surface in accordance with a subtracted result $(= |T'|- |\theta'|)$ to output a determining signal DC4, a multiplying part 61B for multiplying the determining signal DC3 by an SAT estimated value *SAT and a multiplying part 61C for multiplying a multiplied result of the multiplying part 61B by the determining signal DC4 to output a correcting signal CR. The differentiation part 63 obtains the differentiated value T' as a change ratio of the steering torque T and the differentiation part 67 obtains the differentiated value $\theta'$ as a change ratio of the steering angle $\theta$.

As shown in Fig. 5, in the determination part 62, when the multiplied value $T\theta$ is not smaller than 0, that is, the steering torque T and the steering angle $\theta$ have the same directions, the determining signal DC3 indicates "0". When the multiplied value $T \times \theta$ is smaller than 0, that is, the steering torque T and the steering angle $\theta$ have different directions, the determining signal DC3 indicates "1". Further, as shown in Fig. 6, in the determination part 66, when "$|T' |- | \theta' |$" is not smaller than 0, the determining signal DC4 indicates "0". When "$|T'|- |\theta'|$" is smaller than 0, the determining signal DC 4 indicates "1".

In this embodiment, when the determining signal DC3 from the determination part 62 indicates "0", that is, the steering torque T and the steering angle $\theta$ have the same direction, an ordinary steering control is carried out irrespective of the determination of the determination part 66. When the steering torque T and the steering angle $\theta$ have different symbols and have such a relation as "$|T'|< |\theta'|$", the SAT estimated value *SAT is added to a current command value Iref 2 as the correcting signal CR. When the above-described conditions for torque steer are satisfied, the seizure of a steering wheel due to the state of a road surface or a driving is prevented.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1. A control device for an electric power steering apparatus comprising:

   a steering assist command value calculation part that calculates a current command value for a motor applying a steering assist force to a steering mechanism in accordance with a steering torque and a vehicle speed so that the motor is controlled under a feedback control;
   an SAT (self aligning torque) estimating part to which an angular velocity of the motor, an angular acceleration of the motor, the steering torque and the current command value are inputted so as to estimate an SAT; and
   a correcting part that determines a traveling state of a vehicle in accordance with the SAT value estimated in the SAT estimating part, the steering torque and a steering angle to correct the current command value depending on the traveling state.

2. A control device for an electric power steering apparatus comprising:

   a steering assist command value calculation part that calculates a current command value for a motor applying a steering assist force to a steering mechanism in accordance with a steering torque and a vehicle speed so that the motor is controlled under a feedback control;
   an SAT sensor that measures a SAT of a vehicle; and
   a correcting part that determines a traveling state of a vehicle in accordance with the SAT value measured in the SAT sensor, the steering torque and a steering angle to correct the current command value depending on the traveling state.

3. The control device for the electric power steering apparatus according to claim 1, wherein the correcting part comprises:

   a first determining unit that determines directions of the steering torque and the steering angle; and
   a second determining unit that determines whether an absolute value of a change ratio of the SAT value is larger than a predetermined value.

4. The control device for the electric power steering apparatus according to claim 1, wherein the correcting part comprises:

   a third determining unit that determines directions of the steering torque and the steering angle; and
   a fourth determining unit that determines whether an absolute value of a change ratio of the steering torque is larger than an absolute value of a change ratio of the steering angle.

5. The control device for the electric power steering apparatus according to claim 1, wherein the SAT estimating part varies a gain in accordance with the vehicle speed.

6. The control device for the electric power steering apparatus according to claim 2, wherein the correcting part comprises:

   a first determining unit that determines directions of the steering torque and the steering angle; and
   a second determining unit that determines whether an absolute value of a change ratio of the SAT value is larger than a predetermined value.

7. The control device for the electric power steering apparatus according to claim 2, wherein the correcting part comprises:

   a third determining unit that determines directions of the steering torque and the steering angle; and
   a fourth determining unit that determines whether an absolute value of a change ratio of the steering torque is larger than an absolute value of a change ratio of the steering angle.

FIG. 1

## FIG. 2

STEERING TORQUE T → [LPF] 41

CURRENT COMMAND VALUE Iref4 → [LPF] 42

MOTOR ANGULAR SPEED ω → [/◜/] 43
NON-SENSITIVE BAND WIDTH ±DB

ωd

[FRICTION ESTIMATING PART] 44 → Frc

[VISCOUS GAIN] 45 → ω2

MOTOR ANGULAR ACCELERATION ωa → [INERTIA GAIN] 46

40A Tr
40B
40C

[HPF] 47 → [VEHICLE SPEED SENSITIVE GAIN] 48 → [LIMITER] 49 → *SAT

VEHICULAR SPEED V

## FIG. 3

FRICTION (Frc) vs MOTOR ANGULAR SPEED ωd

# FIG. 4

VEHICLE SPEED
SENSITIVE GAIN

1

0

VEHICLE SPEED V

# FIG. 5

DC1(DC3)

1

0

$T \times \theta$

# FIG. 6

DC2(DC4)

1

0

k-|*SAT'|
(|T'|-|$\theta$'|)

FIG. 7

EP 1 839 996 A2

# FIG. 8

EP 1 839 996 A2

*FIG. 9*

STEERING TORQUE T

VEHICLE SPEED V

31 BASIC STEERING ASSIST COMMAND VALUE — STEERING TORQUE (LOW VEHICLE SPEED, INTERMEDIATE VEHICLE SPEED, HIGH VEHICLE SPEED)

Iref1

32 PHASE COMPENSATING PART

Iref2

33 +  +

Iref3

34 +  −

Iref4

35 DIFFERENTIATION COMPENSATING PART

TA

36 PI

37 PWM

38 INVERTER

20 M

i

**EP 1 839 996 A2**

**REFERENCES CITED IN THE DESCRIPTION**

**Patent documents cited in the description**

- JP 2005001481 A
- JP 2003291838 A
- JP 3105847 B